# EUROPEAN PATENT APPLICATION

(11) **EP 3 306 059 A1**
(43) Date of publication of application: **11.04.2018**
(21) Application number: 16799800.4
(22) Date of filing: 11.05.2016
(51) Int. Cl.: F02D 21/08, F02D 43/00, F02D 45/00, F02M 26/00, F02P 5/15

(54) **ENGINE CONTROL DEVICE**

(30) Priority: 28.05.2015 JP 2015108067
(71) Applicant: Hitachi Automotive Systems, Ltd., Hitachinaka-shi, Ibaraki 312-8503 (JP)
(72) Inventor: NAKAGAWA, Shinji, Tokyo 100-8280 (JP); OOSUGA, Minoru, Hitachinaka-shi Ibaraki 312-8503 (JP)
(74) Representative: MERH-IP Matias Erny Reichl Hoffmann Patentanwälte PartG mbB
(86) International application number: PCT/JP2016/063940
(87) International publication number: WO 2016/190092

(57) **Abstract**

An object of the present invention is to optimally control a recirculation amount of exhaust gas flowing to an engine that includes an exhaust heat recovery device in a main exhaust pipe thereof and performs exhaust gas recirculation from downstream of the exhaust heat recovery device. An engine control device includes an exhaust heat recovery device, an exhaust gas recirculation pipe, an exhaust gas temperature acquisition unit, and an exhaust gas recirculation amount control unit. The exhaust heat recovery device is provided in a main exhaust pipe of an engine and recovers heat from exhaust gas. The exhaust gas recirculation pipe is branched from the main exhaust pipe downstream of the exhaust heat recovery device and recirculates exhaust gas to the engine. The exhaust gas temperature acquisition unit acquires an exhaust gas temperature downstream of the exhaust heat recovery device. The exhaust gas recirculation amount control unit controls a recirculation amount of exhaust gas flowing through the exhaust gas recirculation pipe based on at least the exhaust gas temperature.

## Description

### Technical Field

The present invention relates to a control device for an engine and more particularly to an engine control device having an exhaust heat recovery device and an exhaust gas recirculation pipe in an exhaust pipe of an engine.

### Background Art

As a background technique in this technical field, JP 2005-27358 A (PTL 1) discloses the technique. PTL 1 describes "an exhaust heat recovery system, comprising: an exhaust heat recovery unit configured to recover heat of exhaust gas discharged from an engine; a heat amount control unit configured to control a heat amount of exhaust gas sent to the exhaust heat recovery unit; a heat amount detection unit configured to detect a recovery heat amount of the exhaust heat recovery unit, and a control device configured to control the heat amount control unit based on a detected value of the heat amount detection unit") (refer to claim 1).

### Citation List

### Patent Literatures

PTL 1: JP 2005-27358 A

### Summary of Invention

### Technical Problem

However, the above-described prior art is for controlling a recovery heat amount in an exhaust heat recovery unit and is not for optimally controlling a recirculation amount of exhaust gas flowing to an engine in accordance with an exhaust gas temperature changed by the exhaust heat recovery device.

Therefore, an object of the present invention is to optimally control a recirculation amount of exhaust gas flowing to an engine that includes an exhaust heat recovery device in a main exhaust pipe thereof and recirculate exhaust gas from downstream of the exhaust heat recovery device.

### Solution to Problem

To solve the above-described problem, for example, the present invention applies a configuration described in Claims. Although the present application includes a plurality of solutions to the above issue, for example, an engine control device includes an exhaust heat recovery device, an exhaust gas recirculation pipe, an exhaust gas temperature acquisition unit, and an exhaust gas recirculation amount control unit. The exhaust heat recovery device is provided in a main exhaust pipe of an engine and recovers heat from exhaust gas. The exhaust gas recirculation pipe is branched from the main exhaust pipe downstream of the exhaust heat recovery device and recirculates exhaust gas to the engine. The exhaust gas temperature acquisition unit acquires an exhaust gas temperature downstream of the exhaust heat recovery device. The exhaust gas recirculation amount control unit controls a recirculation amount of exhaust gas flowing through the exhaust gas recirculation pipe based on at least the exhaust gas temperature.

That is, in the case where an exhaust heat recovery device is not included in a main exhaust pipe of an engine, an exhaust gas temperature is substantially univocally determined or does not fluctuate greatly from operating conditions (for example, a rotational speed and a load) of the engine. Therefore, the temperature of recirculated exhaust gas is substantially univocally determined or does not fluctuate greatly from the operating conditions of the engine. For this reason, the exhaust gas recirculation amount (EGR amount) is univocally determined from the operating conditions of the engine without considering temperature change. On the other hand, when the exhaust heat recovery device is provided in the exhaust pipe, the exhaust gas temperature downstream of the exhaust heat recovery device changes in accordance with the amount of heat recovered by the exhaust heat recovery device. Therefore, the exhaust gas temperature cannot be univocally determined from the operating conditions of the engine. If the exhaust gas recirculation amount is determined from the operating conditions of the engine without considering change in the recirculated exhaust gas temperature, the recirculated exhaust gas temperature may change even under the same operating condition. At this time, such as a recirculated exhaust gas mass flow rate and combustion temperature change. As a result, combustion performance such as knock limit and NOx emissions changes.

To suppress variation in the combustion performance, a unit for detecting or estimating an exhaust gas temperature downstream of an exhaust heat recovery device, and a unit for controlling the recirculation amount of exhaust gas flowing through an exhaust gas recirculation pipe at least based on the detected or estimated exhaust gas temperature are included.

Further, for example, an exhaust gas temperature acquisition unit which acquires an exhaust gas temperature downstream of the exhaust heat recovery device may be an exhaust temperature sensor disposed downstream of the exhaust heat recovery device or in the exhaust gas recirculation pipe.

That is, an exhaust temperature sensor detects an exhaust gas temperature downstream of the exhaust heat recovery device. The exhaust gas temperature sensor may be disposed in a main exhaust pipe to which the exhaust heat recovery device is attached or may be disposed in an exhaust gas recirculation pipe.

Further, for example, the exhaust gas temperature acquisition unit which acquires an exhaust gas temperature downstream of the exhaust heat recovery device may estimate the exhaust gas temperature based on at least a recovery heat amount or recovery efficiency of the exhaust heat recovery device.

That is, the exhaust gas temperature downstream of the exhaust heat recovery device changes in accordance with a recovered heat amount or recovery efficiency of the exhaust heat recovery device. The exhaust gas temperature is estimated based on the recovered heat amount or recovery efficiency of the exhaust heat recovery device.

Further, for example, an exhaust gas recirculation amount control unit which controls the exhaust gas recirculation amount may be an EGR valve provided in an exhaust gas recirculation pipe.

That is, by controlling an opening of the EGR valve, the exhaust gas recirculation amount is controlled.

Further, for example, the exhaust gas recirculation amount control unit which controls the recirculation amount of exhaust gas flowing through the exhaust gas recirculation pipe preferably controls the exhaust gas recirculation amount such that an EGR rate is within a predetermined range.

The EGR rate correlates with a mass flow ratio. On the other hand, the exhaust gas recirculation amount is divided into a volume flow rate and a mass flow rate. As described above, in the case where an exhaust heat recovery device is not provided in the exhaust pipe, an exhaust gas temperature is almost univocally determined from operating conditions of an engine. Therefore, the volume flow rate and the mass flow rate are also substantially univocally determined. On the other hand, when the exhaust heat recovery device is provided in the exhaust pipe, the exhaust gas temperature downstream of the exhaust heat recovery device changes in accordance with the amount of heat recovered by the exhaust heat recovery device. Therefore, a relationship between the volume flow rate and the mass flow rate changes. That is, under the same volume flow rate, the mass flow rate decreases as the exhaust gas temperature increases, and the mass flow rate increases as the exhaust gas temperature decreases. Since the mass flow rate tends to affect combustion knock limit, when the relationship between the volume flow rate and the mass flow rate changes due to change in the exhaust gas temperature, the exhaust gas recirculation amount is controlled such that an EGR rate correlated with the mass flow rate is within a predetermined range.

Further, for example, an exhaust gas recirculation amount control unit which controls the recirculation amount of exhaust gas flowing through the exhaust gas recirculation pipe preferably controls such that a temperature of mixed gas (gas flowing into a combustion chamber) of the exhaust gas recirculation amount and an intake air amount is within a predetermined range.

That is, when the exhaust heat recovery device is provided in the exhaust pipe, the exhaust gas temperature downstream of the exhaust heat recovery device changes in accordance with the amount of heat recovered by the exhaust heat recovery device, and therefore a temperature of the mixed gas (gas flowing into a combustion chamber) of the exhaust gas recirculation amount and the intake air amount changes. When a temperature of gas flowing into the combustion chamber changes, the change affects combustion knock limit and NOx emissions. When the temperature of gas flowing into the combustion chamber has changed, the exhaust gas recirculation amount is controlled such that the temperature of the mixed gas (gas flowing into the combustion chamber) of the exhaust gas recirculation amount and the intake air amount becomes within a predetermined range.

Further, for example, an exhaust gas recirculation amount control unit which controls the recirculation amount of exhaust gas flowing through the exhaust gas recirculation amount preferably controls such that fuel stability becomes within a predetermined range.

That is, as described above, when the exhaust heat recovery device is provided in the exhaust pipe, the exhaust gas temperature downstream of the exhaust heat recovery device changes in accordance with the amount of heat recovered by the exhaust heat recovery device, and therefore an exhaust gas recirculation mass flow rate and a temperature of gas flowing into a combustion chamber are also changed together, and combustion may become unstable. The exhaust gas recirculation amount is controlled such that combustion stability becomes within a predetermined range. For the combustion stability, such as variation in an in-cylinder pressure and a rotation fluctuation amount are considered.

Further, for example, it is preferable to correct an ignition timing in an advance angle in accordance with increase in the exhaust gas recirculation amount.

That is, when the exhaust gas recirculation amount is increased by the above-described control unit, the knock limit may be extended, and accordingly an ignition timing is corrected to an advance angle side.

Further, for example, an engine control device includes an abnormality determination unit which determines an abnormality of the exhaust heat recovery device based on an exhaust gas temperature downstream of the exhaust heat recovery device, and when the exhaust heat recovery device is determined to be abnormal, the engine control device corrects an exhaust gas recirculation amount by a predetermined amount.

That is, for example, when the exhaust gas temperature downstream of the exhaust heat recovery device is not within the exhaust gas temperature range when the exhaust heat recovery device is functioning normally, it is determined that the exhaust heat recovery device functions abnormally. When it is determined to be abnormal, the exhaust gas recirculation amount is corrected to avoid adverse effects on combustion accompanying a temperature increase of recirculated exhaust gas and a decrease in a mass flow rate per unit volume.

### Advantageous Effects of Invention

According to the present invention, fuel efficiency/exhaust performance/stability performance of an engine improve since an exhaust gas temperature downstream of an exhaust heat recovery device provided in a main exhaust pipe of an engine is detected, and based on the detected exhaust gas temperature, a recirculation amount of exhaust gas flowing through an exhaust gas recirculation pipe is controlled such that combustion performance is optimized.

### Brief Description of Drawings

[FIG. 1] FIG. 1 is a diagram of an engine control system according to first to third, fifth, and sixth embodiments.
[FIG. 2] FIG. 2 is a diagram indicating the interior of a control unit according to the first to third, fifth, and sixth embodiments.
[FIG. 3] FIG. 3 is a block diagram indicating overall control according to the first to third embodiments.
[FIG. 4] FIG. 4 is a block diagram indicating a target EGR rate calculation unit according to the first to fifth embodiments.
[FIG. 5] FIG. 5 is a block diagram illustrating a target EGR valve opening calculation unit according to the first and fifth embodiments.
[FIG. 6] FIG. 6 is a block diagram indicating a target EGR valve opening calculation unit according to the second embodiment.
[FIG. 7] FIG. 7 is a block diagram illustrating a target EGR valve opening calculation unit according to the third embodiment.
[FIG. 8] FIG. 8 is a diagram indicating an engine control system according to a fourth embodiment.
[FIG. 9] FIG. 9 is a diagram indicating the interior of a control unit according to the fourth embodiment.
[FIG. 10] FIG. 10 is a block diagram indicating overall control according to the fourth embodiment.
[FIG. 11] FIG. 11 is a block diagram indicating an estimated exhaust gas temperature calculation unit according to the fourth embodiment.
[FIG. 12] FIG. 12 is a block diagram indicating a target EGR valve opening calculation unit according to the fourth embodiment.
[FIG. 13] FIG. 13 is a block diagram indicating overall control according to the fifth embodiment.
[FIG. 14] FIG. 14 is a block diagram indicating an ignition timing correction value calculation unit according to the fifth embodiment
[FIG. 15] FIG. 15 is a block diagram indicating overall control according to the sixth embodiment.
[FIG. 16] FIG. 16 is a block diagram indicating an exhaust heat recovery device abnormality determination unit according to the sixth embodiment.
[FIG. 17] FIG. 17 is a block diagram indicating a target EGR valve opening calculation unit according to the sixth embodiment.

### Description of Embodiments

Embodiments will be described below with reference to the drawings.

### First Embodiment

A first embodiment describes that an exhaust gas recirculation amount is controlled by using an EGR valve so as to achieve a target EGR rate, based on an output value of a temperature sensor downstream of an exhaust heat recovery device.

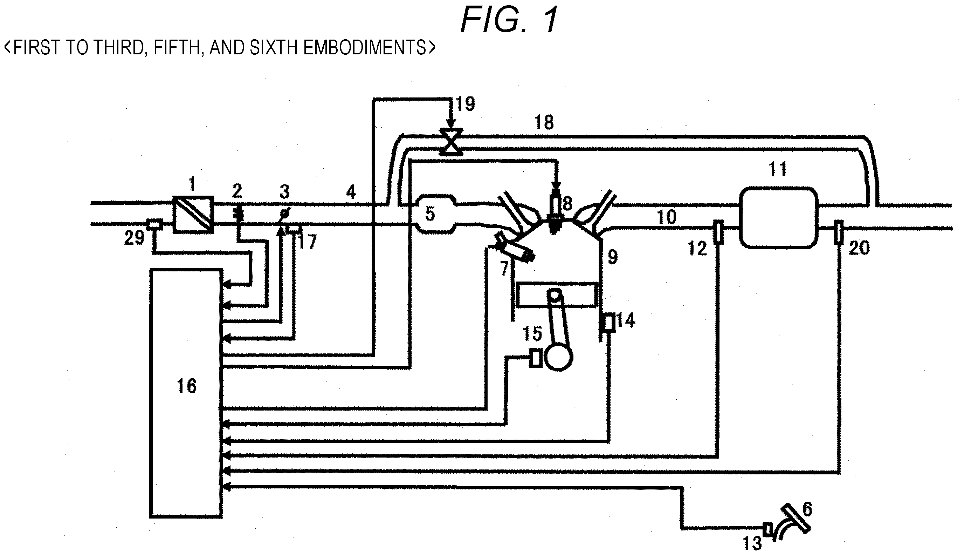

FIG. 1 is a system diagram illustrating the embodiment. In an engine 9 including multiple cylinders (four cylinders in this case), air from the outside passes through an air cleaner 1 and flows into the cylinders via an intake manifold 4 and a collector 5. The amount of inflow air is adjusted by an electronic throttle 3. An air flow sensor 2 detects an inflow air amount. In addition, an intake air temperature sensor 29 detects an intake air temperature. A crank angle sensor 15 outputs a signal for every 10° rotation angle of a crankshaft and a signal for each combustion cycle. A water temperature sensor 14 detects a cooling water temperature of an engine. In addition, an accelerator opening sensor 13 detects a depression amount of an accelerator 6, and accordingly detects a torque requested by a driver.

Each signal of a throttle opening sensor 17, a crank angle sensor 15, and a water temperature sensor 14 attached to the accelerator opening sensor 13, the air flow sensor 2, the intake air temperature sensor 29, and the electronic throttle 3 is sent to a control unit 16 to be described later. After an operation state of the engine is obtained from these sensor outputs, an air amount, a fuel injection amount, an ignition timing, and a main operation amount of an engine for an EGR amount are optimally calculated.

A target air amount calculated in the control unit 16 is converted from a target throttle opening degree into an electronic throttle driving signal and sent to the electronic throttle 3. A fuel injection amount is converted into a valve opening pulse signal and sent to a fuel injection valve (injector) 7. A drive signal is sent to an ignition plug 8 so as to be ignited at an ignition timing calculated by the control unit 16. A drive signal is sent to an EGR valve 19 so as to realize a target EGR amount calculated by the control unit 16.

The injected fuel is mixed with air from an intake manifold and flows into a cylinder of the engine 9 to form an air-fuel mixture. The air-fuel mixture is exploded by sparks generated from the ignition plug 8 at a predetermined ignition timing, and a piston is pushed down by a combustion pressure by the explosion and becomes a driving force of an engine. Exhaust air after the explosion passes through an exhaust manifold 10 and passes through an exhaust heat recovery device 11. After the exhaust heat recovery device recovers heat (energy) possessed by the exhaust air recovers, a part of the exhaust air is returned to an intake side through an exhaust gas recirculation pipe 18. A recirculation amount is controlled by the EGR valve (valve) 19.

A catalyst upstream air-fuel ratio sensor 12 is mounted between the engine 9 and the exhaust heat recovery device 11. In addition, in the embodiment, an exhaust temperature sensor 20 is provided as an exhaust temperature acquisition unit for acquiring an exhaust temperature downstream of the exhaust heat recovery device 11. The exhaust temperature sensor 20 is attached downstream of the exhaust heat recovery device 11.

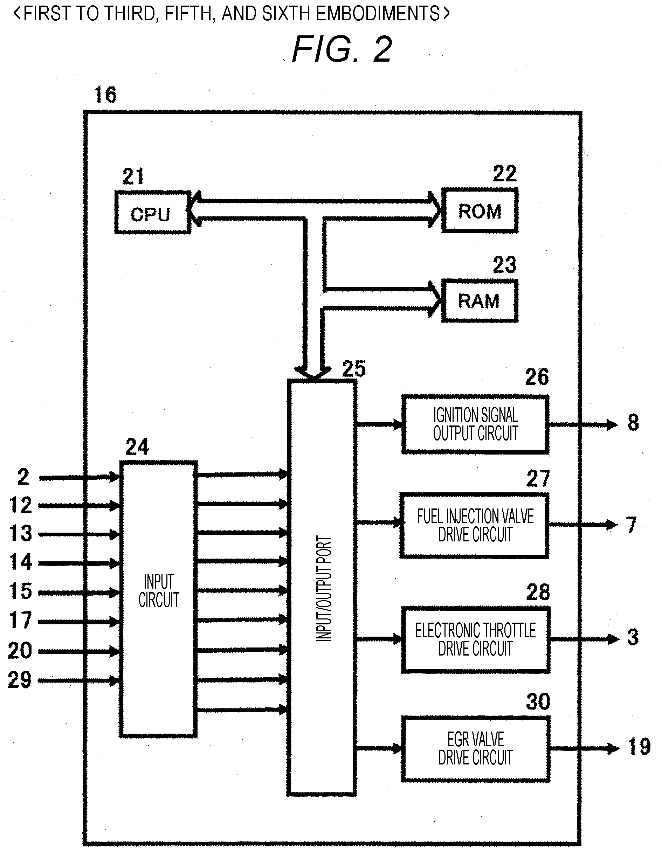

FIG. 2 illustrates the interior of the control unit 16. Each sensor output value of the air flow sensor 2, the catalyst upstream air-fuel ratio sensor 12, the accelerator opening sensor 13, the water temperature sensor 14, the crank angle sensor 15, the throttle valve opening sensor 17, the exhaust temperature sensor 20, the intake air temperature sensor 29, a vehicle speed sensor 30 is input to ECU 16. After an input circuit 24 performs signal processing, such as removal of noise, the value is sent to an input/output port 25. The value of the input port is stored in a RAM 23 and processed in the CPU 21. A control program in which calculation process contents are written is preliminary written in ROM 22. A value representing each actuator operation amount calculated according to a control program is stored in the RAM 23 and then sent to the input/output port 25. As an operation signal of an ignition plug, an ON/OFF signal is set which is turned on when the signal can flow in a primary side coil in an ignition output circuit and turned off when the signal cannot flow therein. The ignition timing is a time from ON to OFF. A signal for the ignition plug set at an output port is amplified to sufficient energy necessary for combustion in the ignition output circuit 26 and supplied to the ignition plug. Further, the ON/OFF signal is set such that a drive signal of a fuel injection valve is turned on when a valve is opened and turned off when the valve is closed. The signal is amplified to energy sufficient for opening the fuel injection valve by a fuel injection valve drive circuit 27 and sent to the fuel injection valve 7. The drive signal for realizing a target opening of the electronic throttle 3 is sent to the electronic throttle 3 via an electronic throttle drive circuit 28. The drive signal for realizing a target opening of the EGR valve 19 is sent to the EGR valve 19 via an EGR valve drive circuit 30.

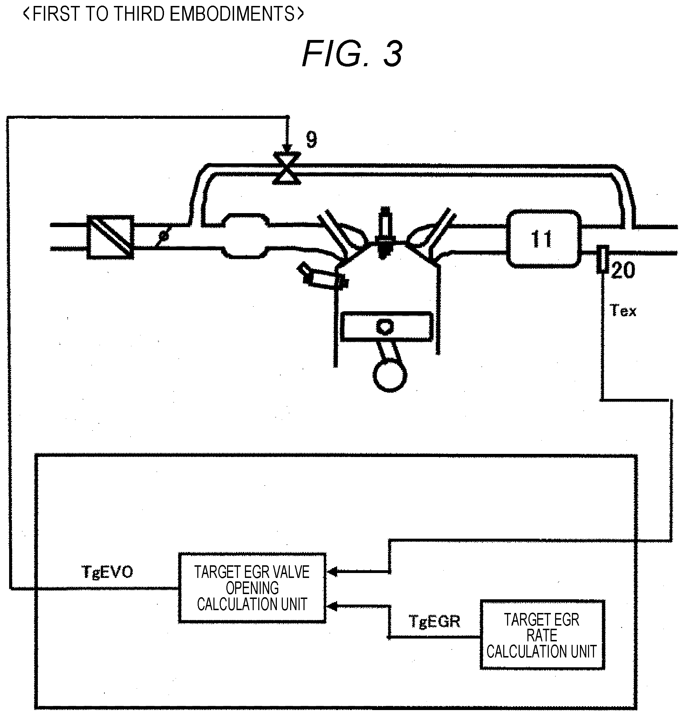

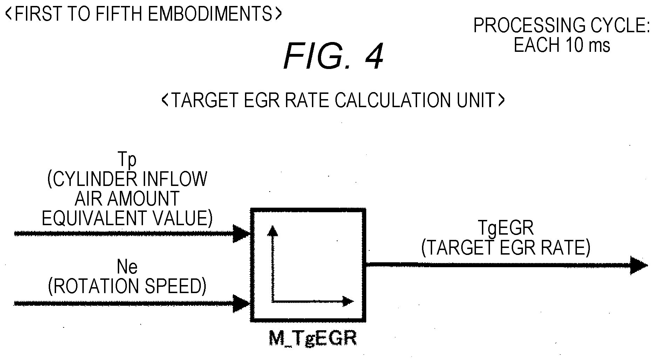

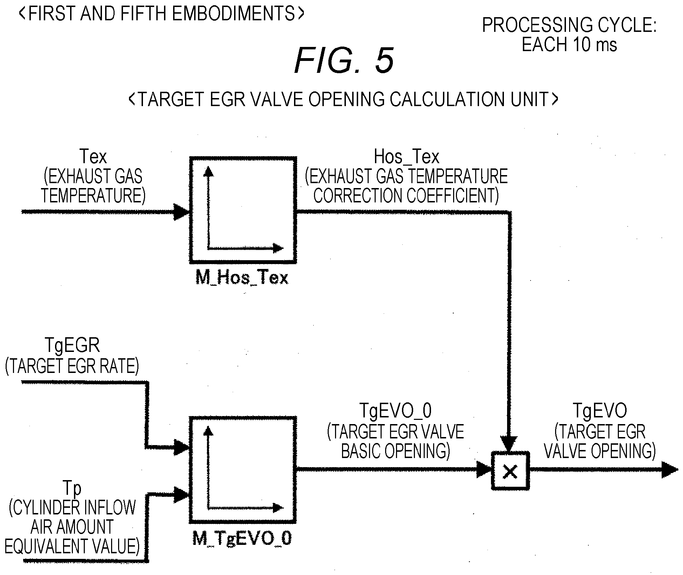

Hereinafter, the control program written in the ROM 22 will be described. FIG. 3 is a block diagram illustrating overall control. The overall control includes the following calculation units.
- Target EGR rate calculation unit (FIG. 4)
- Target EGR valve opening calculation unit (FIG. 5)

The "target EGR rate calculation unit" calculates a target EGR rate (TgEGR). The "target EGR valve opening calculation unit" calculates a target EGR valve opening (TgEVO) based on TgEGR and an exhaust gas temperature (Tex).

In the present embodiment, the exhaust gas temperature (Tex) downstream of the exhaust heat recovery device 11 is detected, and the exhaust gas recirculation amount (EGR valve opening) is controlled so as to optimize combustion performance in accordance with the detected exhaust gas temperature. As a result, fuel efficiency/exhaust performance/stability performance of an engine improve. Details of each calculation unit will be described below.

### <Target EGR rate calculation unit (FIG. 4)>

In this calculation unit, TgEGR (target EGR rate) is calculated. FIG. 4 specifically describes.

A value obtained by referring to a map M_TgEGR by using TP (cylinder inflow air amount equivalent value) and Ne (rotational speed) is set to the TgEGR.

A set value of the map M_TgEGR is preferably determined from such as an actual machine test so as to achieve the desired fuel consumption performance/exhaust performance based on the engine (combustion) performance. An exhaust gas temperature that is a premise of a setting value of the map is set at a specific exhaust gas temperature, for example, set in a state where an exhaust heat recovery device is not functioning.

### <Target EGR valve opening calculation unit (FIG. 5)>

The calculation unit calculates TgEVO (target EGR valve opening). FIG. 5 specifically describes.
- A value obtained by referring to a map M_TgEVO_0 by using TgEGR and Tp is set to TgEVO_0 (target EGR valve basic opening) .
- A value obtained by referring to a map M_Hos_Tex by using Tex is set to Hos_Tex (exhaust gas temperature correction coefficient).
- A value obtained by multiplying TgEVO_0 by Hos_Tsx is TgEVO.

The setting value of the map M_TgEVO_0 sets an EGR valve opening for realizing Tg_EGR under each operating condition. The exhaust gas temperature that is a premise of a set value of the map is a value set when M_TgEGR indicated in FIG. 4 is set. In addition, the engine speed (Ne) may also be referred to improve accuracy.

As a setting value of the map M_Hos_Tex, a correction value for TgEVO_0 is set such that TgEVO realizes TgEGR at an actual exhaust gas temperature (Tex). Generally, as an exhaust gas temperature decreases, the value of Hos_Tex decreases, and as the exhaust gas temperature increases, the value of Hos_Tex increases.

In the present embodiment, the exhaust temperature sensor is disposed directly under the exhaust heat recovery device. However, it may be disposed in an exhaust pipe flow pipe.

### Second Embodiment

The present embodiment describes that an exhaust gas recirculation amount is controlled by using an EGR valve so as to achieve a target EGR rate based on an output value of a temperature sensor downstream of an exhaust heat recovery device and also controlled such that the exhaust gas recirculation amount (inflow gas in a combustion chamber) is limited within a predetermined range.

FIG. 1 is a system diagram illustrating the embodiment. The system diagram is the same as that of the first embodiment (FIG. 1), and therefore details will not be described.

FIG. 2 indicates the interior of a control unit 16, which is the same as that of the first embodiment (FIG. 5), and therefore details will not be described.

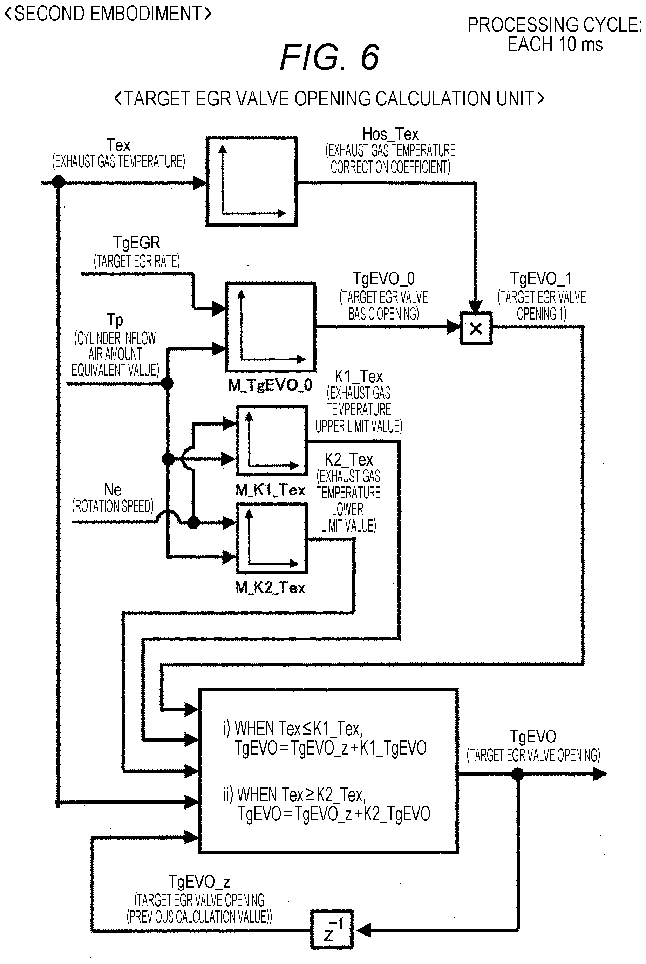

Hereinafter, a control program written in ROM 22 will be described. FIG. 3 is a block diagram illustrating overall control. The overall control includes the following calculation units.
- Target EGR rate calculation unit (FIG. 4)
- Target EGR valve opening calculation unit (FIG. 6)

The "target EGR rate calculation unit" calculates a target EGR rate (TgEGR). The "target EGR valve opening calculation unit" calculates a target EGR valve opening (TgEVO) based on TgEGR and an exhaust gas temperature (Tex) . However, under each operating condition, the exhaust gas recirculation amount (EGR valve opening) is limited such that Tex does not excessively rise or fall as it adversely affects engine performance.

In the present embodiment, the exhaust gas temperature (Tex) downstream of an exhaust heat recovery device is detected, and an exhaust gas recirculation amount (EGR valve opening) is controlled so as to optimize combustion performance in accordance with the detected exhaust gas temperature. On the other hand, since the exhaust gas recirculation amount (EGR valve opening) is limited such that Tex does not excessively rise or fall as it adversely affects the engine performance, knock limit and NOx emissions of combustion are optimized, and the fuel consumption and exhaust performance of an engine improve. Details of each calculation unit will be described below.

### <Target EGR rate calculation unit (FIG. 4)>

The calculation unit calculates TgEGR (target EGR rate). Specifically, although illustrated in FIG. 4, the calculation unit is the same as that of the first embodiment and therefore will not be described in detail.

### <Target EGR valve opening calculation unit (FIG. 6)>

The calculation unit calculates TgEVO (target EGR valve opening). FIG. 6 specifically describes.
- A value obtained by referring to a map M_TgEVO_0 by using TgEGR and Tp is set to TgEVO_0 (target EGR valve basic opening) .
- A value obtained by referring to a map M_Hos_Tex by using Tex is set to Hos_Tex (exhaust gas temperature correction coefficient).
- A value obtained by multiplying TgEVO_0 by Hos_Tsx is set to TgEVO_1 (target EGR valve opening 1).
- A value obtained by referring to a map M_K1_Tex by using TP and Ne is set as K1_Tex (exhaust gas temperature upper limit value).
- A value obtained by referring to a map M_K2_Tex by using TP and Ne is set as K2_Tex (exhaust gas temperature lower limit value).
   • i) When Tex ≤ K1_Tex, TgEVO = TgEVO_z + K1_TgEVO
   ii) When Tex ≥ K2_Tex, TgEVO = TgEVO_z + K2_TgEVO Here, TgEVO_z is the previous calculated value of TgEVO.

As a setting value of the map M_TgEVO_0, an EGR valve opening for realizing Tg_EGR under each operating condition as in the first embodiment is set. The exhaust gas temperature that is a premise of a set value of the map is a value set when M_TgEGR indicated in FIG. 4 is set. In addition, the engine speed (Ne) may also be referred to improve accuracy.

As a setting value of the map M_Hos_Tex, as in the first embodiment, a correction value for TgEVO_0 is set such that TgEVO realizes TgEGR at an actual exhaust gas temperature (Tex) . Generally, as an exhaust gas temperature decreases, the value of Hos_Tex decreases, and as the exhaust gas temperature increases, the value of Hos_Tex increases.

The set values of the maps M_K1_TgEVO and M_K2_TgEVO are set based on the combustion performance such that the fuel consumption performance (for example, knock limit) and the exhaust performance (for example, NOx) do not deviate from desired ranges.

In the present embodiment, the exhaust temperature sensor is disposed directly under the exhaust heat recovery device. However, it may be disposed in an exhaust pipe flow pipe.

### Third Embodiment

The present embodiment describes that an exhaust gas recirculation amount is controlled by using an EGR valve so as to achieve a target EGR rate based on an output value of a temperature sensor downstream of an exhaust heat recovery device and also controlled such that fuel stability is within a predetermined range.

FIG. 1 is a system diagram illustrating the embodiment. The system diagram is the same as that of the first embodiment (FIG. 1), and therefore details will not be described. FIG. 2 indicates the interior of a control unit 16, which is the same as that of the first embodiment (FIG. 2, and therefore, details will not be described.

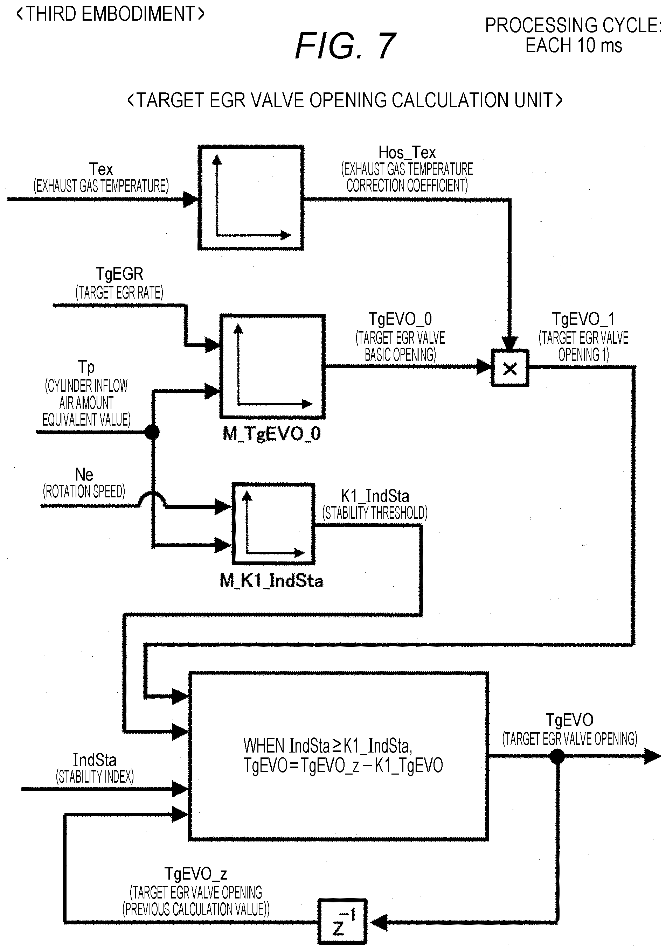

Hereinafter, the control program written in the ROM 22 will be described. FIG. 3 is a block diagram illustrating overall control. The overall control includes the following calculation units.
- Target EGR rate calculation unit (FIG. 4)
- Target EGR valve opening calculation unit (FIG. 7)

The "target EGR rate calculation unit" calculates a target EGR rate (TgEGR). The "target EGR valve opening calculation unit" calculates a target EGR valve opening (TgEVO) based on TgEGR and an exhaust gas temperature (Tex) . However, under each operating condition, the exhaust gas recirculation amount (EGR valve opening) is limited such that the stability of an engine (combustion) is not excessively deteriorated.

In the present embodiment, the exhaust gas temperature (Tex) downstream of the exhaust heat recovery device is detected, and the exhaust gas recirculation amount (EGR valve opening) is controlled so as to optimize combustion performance in accordance with the detected exhaust gas temperature. On the other hand, an exhaust gas recirculation amount (EGR valve opening) is limited so as not to excessively deteriorate combustion stability, and therefore engine robustness is improved. Details of each calculation unit will be described below.

### <Target EGR rate calculation unit (FIG. 4)>

In this calculation unit, TgEGR (target EGR rate) is calculated. Specifically, although illustrated in FIG. 4, the calculation unit is the same as that of the first embodiment and therefore will not be described in detail.

### <Target EGR valve opening calculation unit (FIG. 7)>

The calculation unit calculates TgEVO (target EGR valve opening). FIG. 6 specifically describes.
- A value obtained by referring to a map M_TgEVO_0 by using TgEGR and Tp is set to TgEVO_0 (target EGR valve basic opening) .
- A value obtained by referring to a map M_Hos_Tex by using Tex is set to Hos_Tex (exhaust gas temperature correction coefficient).
- A value obtained by multiplying TgEVO_0 by Hos_Tsx is set to TgEVO_1 (target EGR valve opening 1).
- A value obtained by referring to a map M_K1_IndSta by using TP and Ne is set to K1_IndSta (stability threshold).
- When IndSta ≥ K1_IndSta, TgEVO = TgEVO_z - K1_TgEVO

Here, TgEVO_z is the previous calculated value of TgEVO. IndSta is a stability index which is a value correlated with combustion stability. For example, such as the magnitude of rotational fluctuation, the degree of variation in engine rotation angle acceleration, and the degree of variation in an in-cylinder pressure are considered. These calculation methods include many known techniques and therefore will not be described here in detail.

As a setting value of the map M_TgEVO_0, an EGR valve opening for realizing Tg_EGR under each operating condition as in the first embodiment is set. The exhaust gas temperature that is a premise of a set value of the map is a value set when M_TgEGR indicated in FIG. 4 is set. In addition, the engine speed (Ne) may also be referred to improve accuracy.

As a setting value of the map M_Hos_Tex, as in the first embodiment, a correction value for TgEVO_0 is set such that TgEVO realizes TgEGR at an actual exhaust gas temperature (Tex) . Generally, as an exhaust gas temperature decreases, the value of Hos_Tex decreases, and as the exhaust gas temperature increases, the value of Hos_Tex increases.

A set value of the map M_K1_IndSta is set such that combustion stability does not deviate from the desired range.

In the present embodiment, an exhaust temperature sensor is disposed directly under the exhaust heat recovery device. However, it may be disposed in an exhaust pipe flow pipe.

### Fourth Embodiment

In the present embodiment, an exhaust gas temperature acquisition unit for acquiring an exhaust gas temperature downstream of an exhaust heat recovery device estimates an exhaust gas temperature based on a recovered heat amount (recovery efficiency) of the exhaust heat recovery device and acquires the estimated exhaust gas temperature. The present embodiment describes that an exhaust gas recirculation amount is controlled by using an EGR valve so as to achieve a target EGR rate based on the estimated temperature.

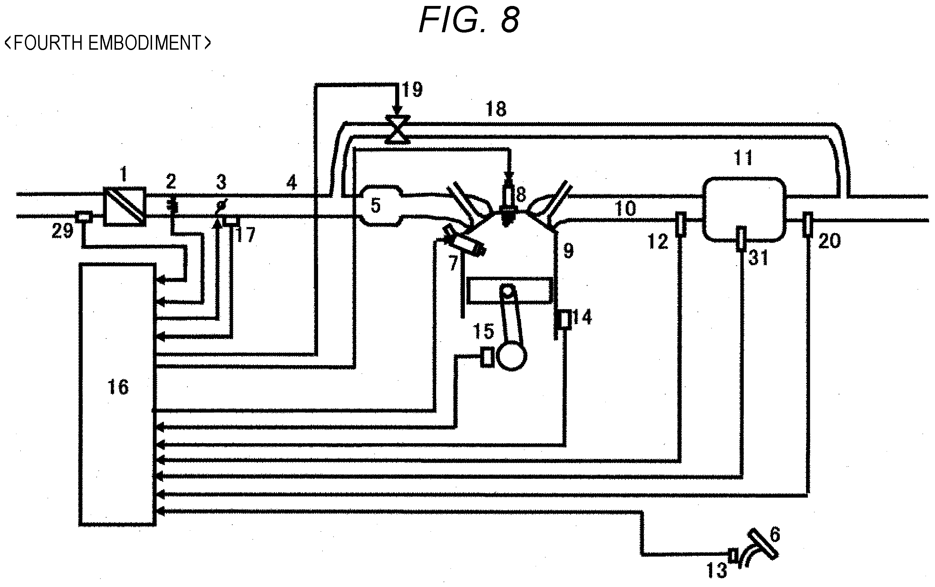

FIG. 8 is a system diagram illustrating the embodiment. A heat recovery amount/recovery efficiency detector 31 is disposed in an exhaust heat recovery device 11. In the first embodiment, the exhaust temperature sensor 20 is attached downstream of the exhaust heat recovery device 11. However, in the present embodiment, the heat recovery amount/recovery efficiency detector 31 is disposed in the exhaust heat recovery device 11. The heat recovery amount/recovery efficiency detector also depends on the recovery principle of the exhaust heat recovery device. However, for example, a current value and a voltage value generated at the time of heat recovery and a temperature of a heat medium is considered. Other than the above, the present embodiment is the same as the first embodiment and therefore will not be described in detail.

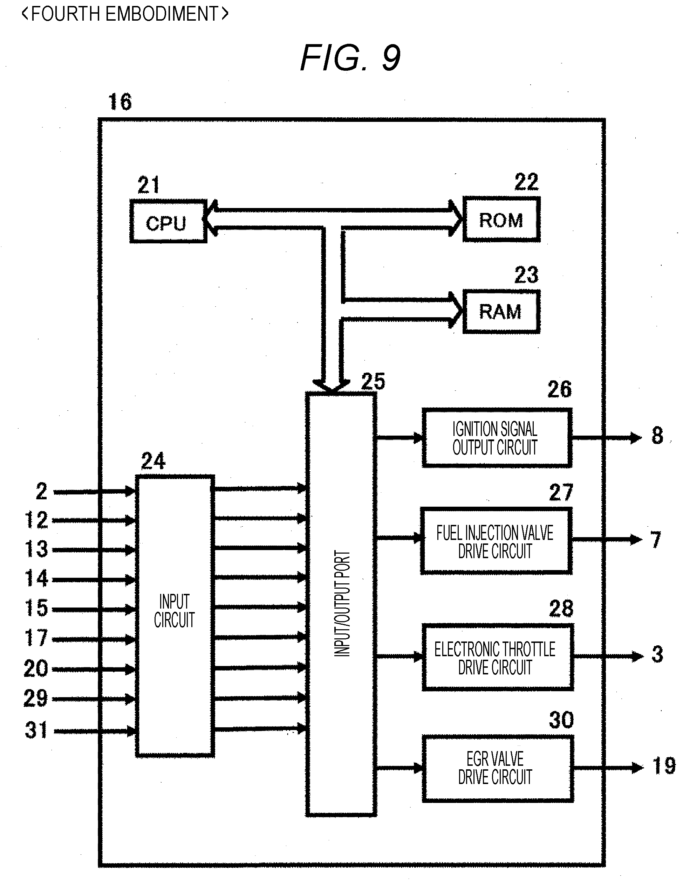

FIG. 9 illustrates the interior of a control unit 16. An output value of the heat recovery amount/recovery efficiency detector 31 is input into the ECU 16, and signal processing such as noise removal is performed in an input circuit 24. Then, the value is sent to an input/output port 25. Other than the above, the present embodiment is the same as the first embodiment and therefore will not be described in detail.

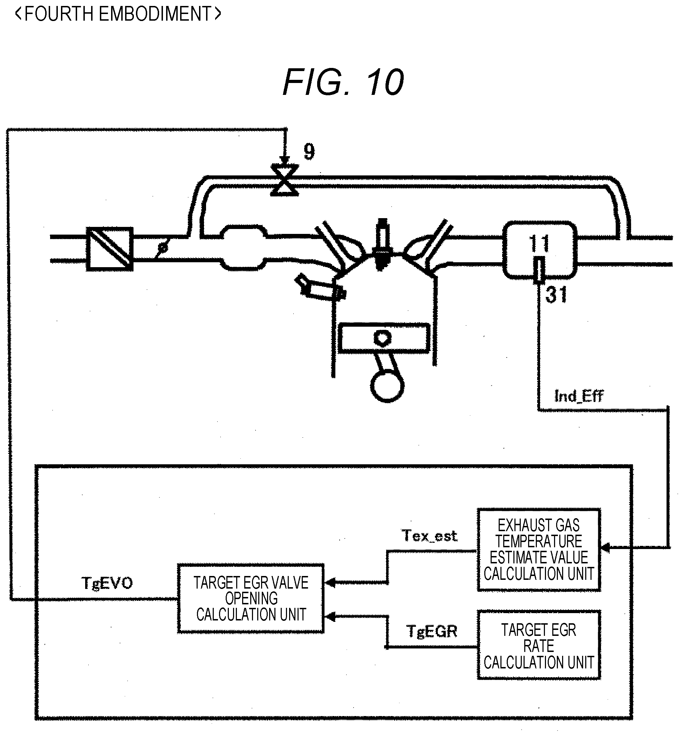

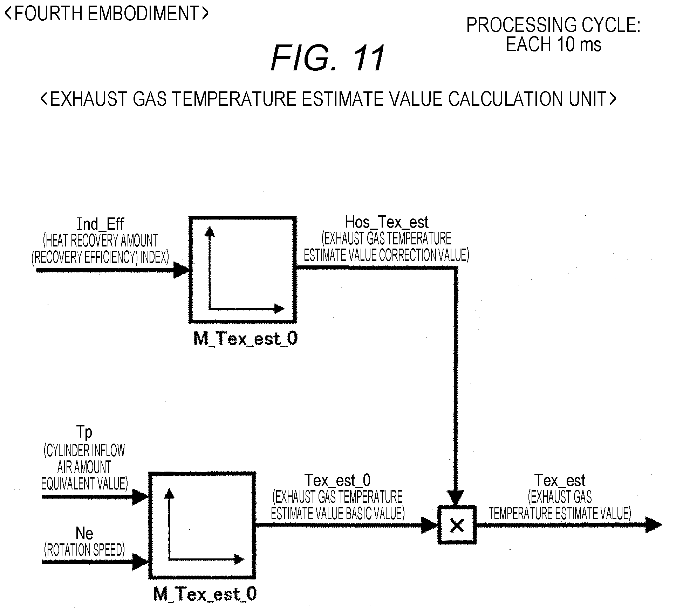

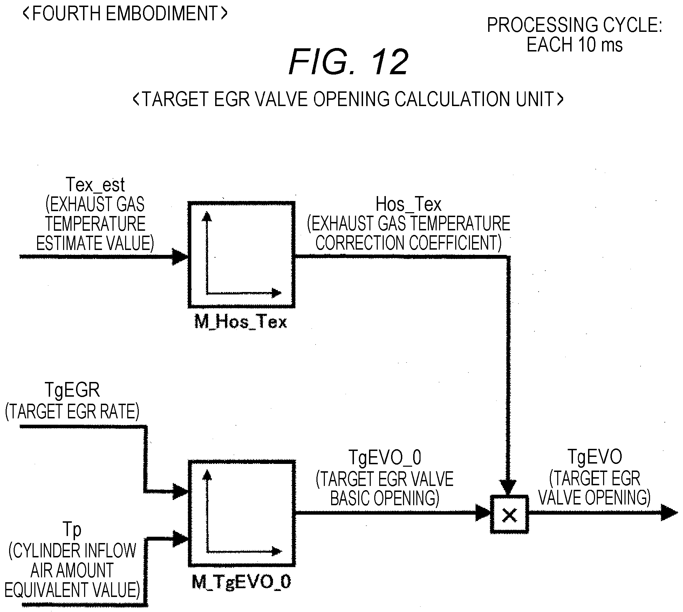

Hereinafter, the control program written in the ROM 22 will be described. FIG. 10 is a block diagram illustrating overall control. The overall control includes the following calculation units.
- Estimated exhaust gas temperature calculation unit (FIG. 11)
- Target EGR rate calculation unit (FIG. 4)
- Target EGR valve opening calculation unit (FIG. 12)

The "estimated exhaust gas temperature calculation unit" calculates Tex_est (estimated exhaust gas temperature) based on Ind_Eff (heat recovery amount (recovery efficiency) index) . The "target EGR rate calculation unit" calculates a target EGR rate (TgEGR) . The "target EGR valve opening calculation unit" calculates a target EGR valve opening (TgEVO) based on TgEGR and an exhaust gas temperature (Tex).

In the present embodiment, the exhaust gas temperature (Tex) downstream of the exhaust heat recovery device is estimated based on the detected value by the heat recovery amount/recovery efficiency detector 31 disposed in the exhaust heat recovery device 11, and the exhaust gas recirculation amount (EGR valve opening) is controlled so as to optimize combustion performance in accordance with the estimated exhaust gas temperature. Therefore, fuel efficiency/exhaust performance/stability performance of an engine improve. Details of each calculation unit will be described below.

### <Estimated exhaust gas temperature calculation unit (FIG. 11)>

In this calculation unit, Tex_est (estimated exhaust gas temperature) is calculated. FIG. 11 specifically describes.
- A value obtained by referring to a map M_Tex_est_0 by using TgEGR and Tp is set to Tex_est_0 (basic estimated exhaust gas temperature).
- A value obtained by referring to a map M_Hos_Tex_est by using Ind_Eff (heat recovery amount (recovery efficiency) index) is set to Hos_Tex_est (estimated exhaust gas temperature correction value).
- A value obtained by multiplying Tex_est_0 by Hos_Tex_est is set as Tex_est (estimated exhaust gas temperature).

A set value of the map M_Tex_est is set at a specific exhaust gas temperature, for example, set at an exhaust gas temperature at the time when the exhaust heat recovery device is not functioning. A setting value of the map M_Tex_est_0 is set such that the actual exhaust gas temperature corresponding to the value of Ind_Eff and Tex_est coincide. Generally, when Ind_Eff increases, the exhaust gas temperature decreases, and therefore the value of Hos_Tex_est decreases, and as Ind_Eff decreases, the exhaust gas temperature increases, and the value of Hos_Tex_est increases. Incidentally, as described above, Ind_Eff is, for example, a value obtained by indexing such as a current value, a voltage value generated at the time of heat recovery, or the temperature of a heating medium.

<Target EGR rate calculation unit (FIG. 4)> The calculation unit calculates TgEGR (target EGR rate). Specifically, although illustrated in FIG. 4, the calculation unit is the same as that of the first embodiment and therefore will not be described in detail.

### <Target EGR valve opening calculation unit (FIG. 12)>

The calculation unit calculates TgEVO (target EGR valve opening). FIG. 12 specifically describes.
- A value obtained by referring to a map M_TgEVO_0 by using TgEGR and Tp is set to TgEVO_0 (target EGR valve basic opening) .
- A value obtained by referring to a map M_Hos_Tex by using Tex_est is set to Hos_Tex (exhaust gas temperature correction coefficient).
- A value obtained by multiplying TgEVO_0 by Hos_Tsx is TgEVO.

The setting value of the map M_TgEVO_0 sets an EGR valve opening for realizing Tg_EGR under each operating condition. The exhaust gas temperature that is a premise of a set value of the map is a value set when M_TgEGR indicated in FIG. 4 is set. In addition, the engine speed (Ne) may also be referred to improve accuracy.

As a setting value of the map M_Hos_Tex, a correction value for TgEVO_0 is set such that TgEVO realizes TgEGR at the estimated exhaust gas temperature (Tex_est) or an actual exhaust gas temperature. Generally, as an exhaust gas temperature decreases, the value of Hos_Tex decreases, and as the exhaust gas temperature increases, the value of Hos_Tex increases.

### Fifth Embodiment

The present embodiment describes that, based on an output value of a temperature sensor downstream of an exhaust heat recovery device, an exhaust gas recirculation amount is controlled by using an EGR valve so as to achieve a target EGR rate, and in accordance with increase in the exhaust gas recirculation amount, an ignition timing is corrected in an advance angle.

FIG. 1 is a system diagram illustrating the embodiment. The system diagram is the same as that of the first embodiment (FIG. 1), and therefore details will not be described. FIG. 2 indicates the interior of a control unit 16, which is the same as that of the first embodiment (FIG. 5), and therefore details will not be described.

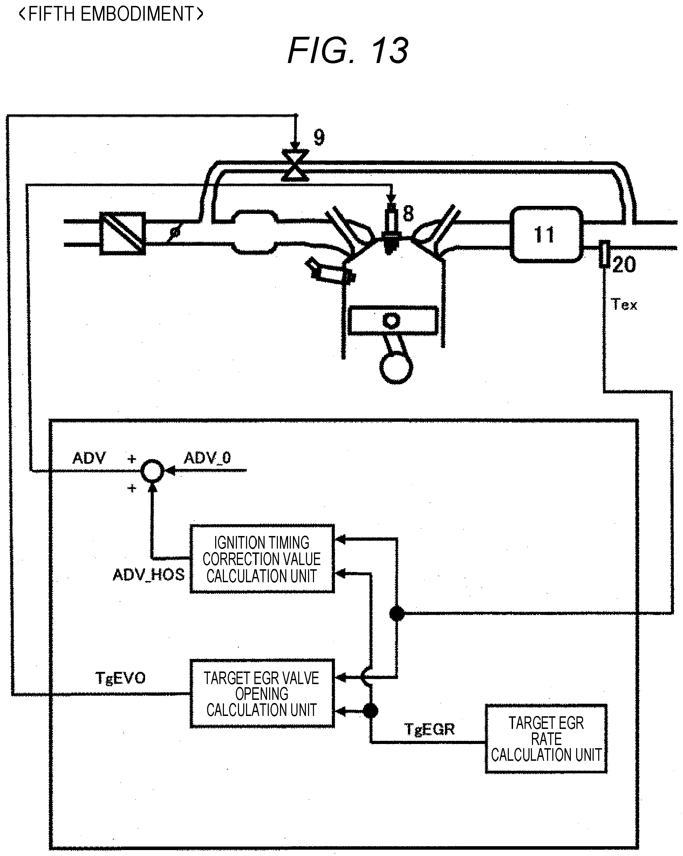

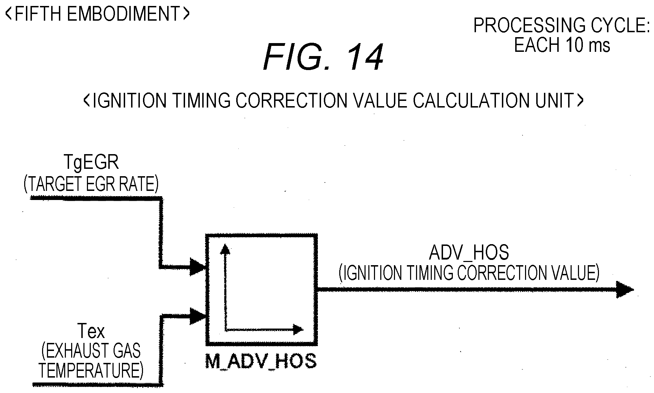

Hereinafter, the control program written in the ROM 22 will be described. FIG. 13 is a block diagram illustrating overall control. The overall control includes the following calculation units.
- Target EGR rate calculation unit (FIG. 4)
- Target EGR valve opening calculation unit (FIG. 5)
- Ignition timing correction value calculation unit (FIG. 14)

The "target EGR rate calculation unit" calculates a target EGR rate (TgEGR). The "target EGR valve opening calculation unit" calculates a target EGR valve opening (TgEVO) based on TgEGR and an exhaust gas temperature (Tex) . The "ignition timing correction value calculation unit" calculates the ignition timing correction value (ADV_HOS) based on TgEGR and Tex. A value obtained by adding ADV_HOS to the basic ignition timing (ADV_0) is set as the final ignition timing (ADV) . A calculation method of the basic ignition timing (ADV_0) includes known techniques and therefore will not be described here in detail.

In the present embodiment, the exhaust gas temperature (Tex) downstream of the exhaust heat recovery device 11 is detected, and the exhaust gas recirculation amount (EGR valve opening) is controlled so as to optimize combustion performance in accordance with the detected exhaust gas temperature. On the other hand, when the exhaust gas recirculation amount changes, the knock limit may change, and therefore the ignition timing is corrected to an advance angle side accordingly, and the fuel consumption performance/robustness of an engine improves. Details of each calculation unit will be described below.

### <Target EGR rate calculation unit (FIG. 4)>

In this calculation unit, TgEGR (target EGR rate) is calculated. Specifically, although illustrated in FIG. 4, the calculation unit is the same as that of the first embodiment and therefore will not be described in detail.

### <Target EGR valve opening calculation unit (FIG. 5)>

The calculation unit calculates TgEVO (target EGR valve opening). Specifically, although illustrated in FIG. 5, the unit is the same as that of the first embodiment, and therefore will not be described in detail.

### <Ignition timing correction value calculation unit (FIG. 14)>

This calculation unit calculates ADV_HOS (ignition timing calculation unit correction value). FIG. 12 specifically describes.
- A value obtained by referring to a map M_ADV_HOS by using TgEGR and Tex is set as ADV_HOS.

As a setting value of the map M_ADV_HOS, a correction value for the basic ignition timing (ADV_0) is set such that the ignition timing is optimized in accordance with a change in an EGR rate (TgEGR) . Furthermore, if the exhaust gas temperature (Tex) is different even at an equal EGR rate, the optimal ignition timing may change, and therefore the setting value is determined such that the ignition timing is optimized in accordance with Tex under equal TgEGR. Generally, when the recirculated exhaust gas temperature drops, the knock limit extends, and therefore, under the equal TgEGR, the ADV_HOS is set to increase (advance) when Tex decreases, and the knock limit is shortened when the recirculated exhaust gas temperature increases. Therefore, under the equal TgEGR, when Tex decreases, ADV_HOS is set so as to be small (close).

### Sixth Embodiment

The present embodiment describes that an abnormality of an exhaust heat recovery device is determined based on an output value of an temperature sensor downstream of an exhaust heat recovery device, and when it is determined to be abnormal, an exhaust gas recirculation amount is corrected by a predetermined amount by using an EGR valve.

FIG. 1 is a system diagram illustrating the embodiment. The system diagram is the same as that of the first embodiment (FIG. 1), and therefore details will not be described. FIG. 2 indicates the interior of a control unit 16, which is the same as that of the first embodiment (FIG. 5), and therefore details will not be described.

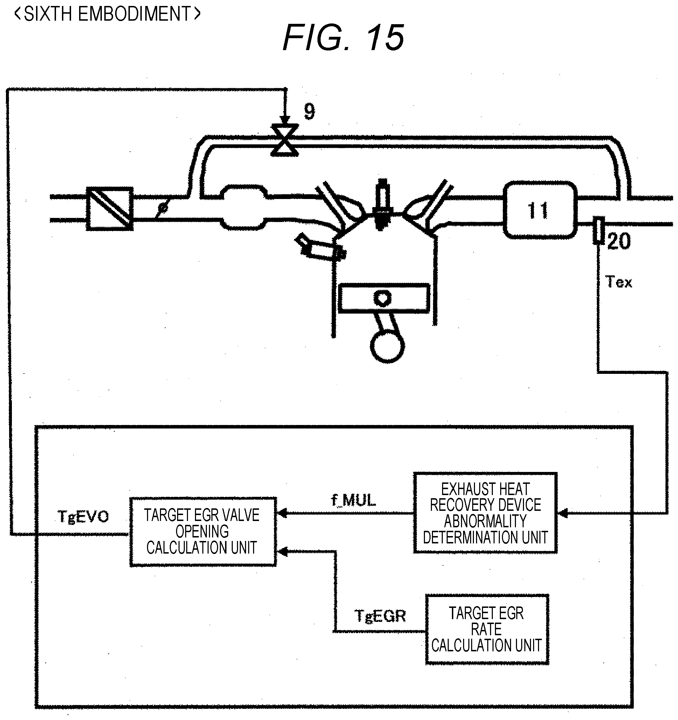

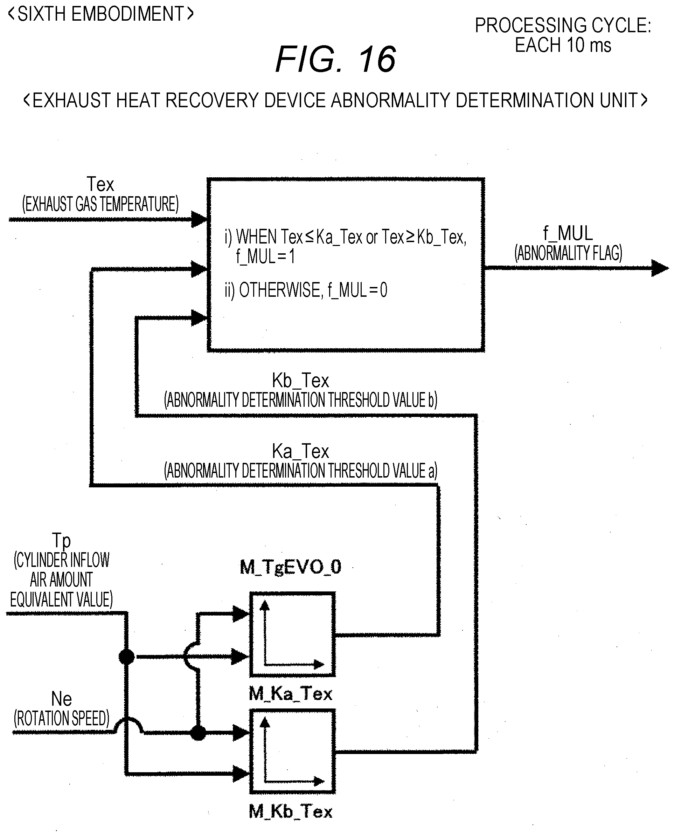

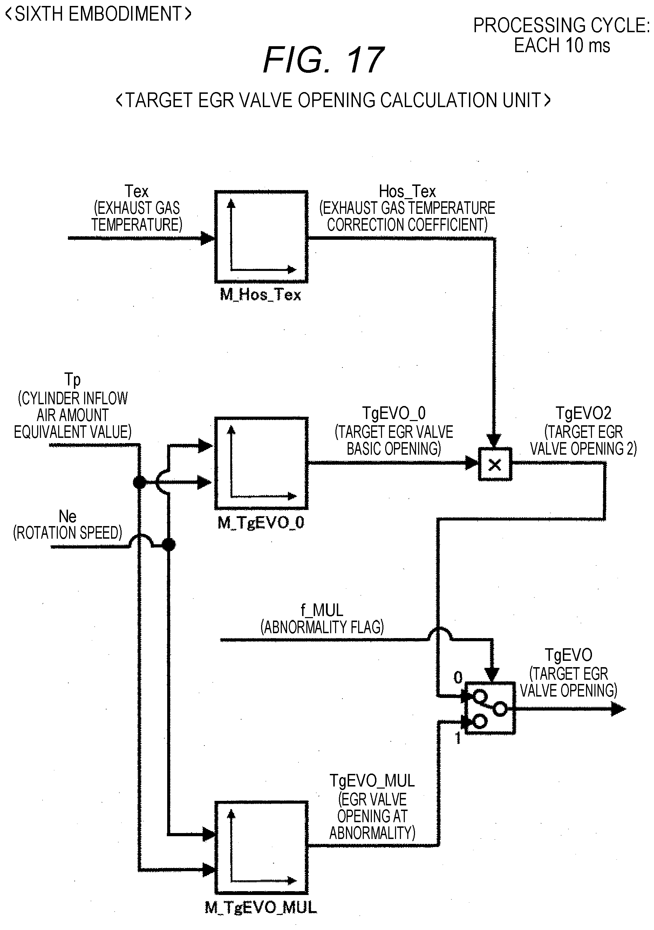

Hereinafter, the control program written in the ROM 22 will be described. FIG. 15 is a block diagram illustrating overall control. The overall control includes the following calculation units.
- Exhaust heat recovery device abnormality determination unit (FIG. 16)
- Target EGR rate calculation unit (FIG. 4)
- Target EGR valve opening calculation unit (FIG. 17)

The "exhaust heat recovery device abnormality determination unit" calculates an abnormality flag (f_MUL) based on an exhaust gas temperature (Tex) . The "target EGR rate calculation unit" calculates a target EGR rate (TgEGR). The "target EGR valve opening calculation unit" calculates a target EGR valve opening (TgEVO) based on f_MUL, TgEGR, and Tex. When the exhaust heat recovery device is abnormal, the target EGR valve opening is controlled to a specific opening.

In the present embodiment, the exhaust gas temperature (Tex) downstream of an exhaust heat recovery device 11 is detected, and when it is determined from the detected exhaust gas temperature that the exhaust heat recovery device is not functioning normally, to avoid an adverse effect on combustion accompanying a temperature rise of recirculated exhaust gas and a decrease in a mass flow rate per unit volume, an exhaust gas recirculation amount is corrected, and robustness of an engine is improved. Details of each calculation unit will be described below.

### <Exhaust heat recovery device abnormality determination unit (FIG. 16)>

This calculation unit calculates f_MUL (abnormality flag). FIG. 16 specifically described.
- A value obtained by referring to a map M_Ka_Tex by using TP and Ne is set as Ka_Tex (abnormality determination threshold a).
- A value obtained by referring to a map M_Kb_Tex by using TP and Ne is set as Kb_Tex (abnormality determination threshold b).
   i) When Tex ≤ Ka_Tex or Tex ≥ Kb_Tex, f_MUL = 1
   ii) Otherwise, f_MUL = 0

As setting values of the maps M_Ka_Tex and M_Kb_Tex, a temperature not to be reached when the exhaust heat recovery device is functioning normally, that is, a temperature in an abnormal state, is set.

### <Target EGR rate calculation unit (FIG. 4)>

In this calculation unit, TgEGR (target EGR rate) is calculated. Specifically, although illustrated in FIG. 4, the calculation unit is the same as that of the first embodiment and therefore will not be described in detail.

### <Target EGR valve opening calculation unit (FIG. 17)>

The calculation unit calculates TgEVO (target EGR valve opening). FIG. 17 specifically described.
- A value obtained by referring to a map M_TgEVO_0 by using TgEGR and Tp is set to TgEVO_0 (target EGR valve basic opening) .
- A value obtained by referring to a map M_Hos_Tex by using Tex is set to Hos_Tex (exhaust gas temperature correction coefficient).
- A value obtained by multiplying TgEVO_0 by Hos_Tsx is set to TgEVO2 (target EGR valve opening 2).
- A value obtained by referring to a map M_TgEVO_MUL by using TP and Ne is set as TgEVO_MUL (EGR valve opening at abnormality).
   When f_MUL = 0, TgEVO = TgEVO2
   When f_MUL = 1, TgEVO = TgEVO_MUL

As a setting value of the map M_TgEVO_0, the EGR valve opening for realizing TgEGR under each operating condition is set. The exhaust gas temperature that is a premise of the setting value of the map is a value set when M_TgEGR indicated in FIG. 4 is set. In addition, the engine speed (Ne) may also be referred to improve accuracy.

As a setting value of the map M_Hos_Tex, a correction value for TgEVO_0 is set such that TgEVO2 realizes TgEGR at an actual exhaust gas temperature (Tex). Generally, as an exhaust gas temperature decreases, the value of Hos_Tex decreases, and as the exhaust gas temperature increases, the value of Hos_Tex increases.

A set value of the map M_TgEVO_MUL is set to an EGR valve opening at which a recirculation amount does not adversely affect on an engine even when the exhaust heat recovery device is operating abnormally.

In the present embodiment, the exhaust temperature sensor is disposed directly under the exhaust heat recovery device. However, it may be disposed in an exhaust pipe flow pipe. Reference Signs List

1 air cleaner
2 air flow sensor
3 electronic throttle
4 intake pipe
5 collector
6 accelerator
7 fuel injection valve
8 ignition plug
9 engine
10 exhaust pipe
11 exhaust heat recovery device
12 A/F sensor
13 accelerator opening sensor
14 water temperature sensor
15 engine speed sensor
16 control unit
17 throttle opening sensor
18 exhaust gas recirculation pipe
19 exhaust gas recirculation flow control valve
20 exhaust temperature sensor
21 CPU mounted in control unit
22 ROM mounted in control unit
23 RAM mounted in control unit
24 input circuits of various sensors mounted in control unit
25 input of various sensor signals, port outputting actuator operation signal
26 ignition output circuit for outputting drive signal to spark plug at appropriate timing
27 fuel injection valve drive circuit for outputting appropriate pulse to fuel injection valve
28 electronic throttle drive circuit
29 intake air temperature sensor
30 exhaust gas recirculation flow control valve drive circuit
31 heat recovery amount/recovery efficiency detector

## Claims

1. An engine control device, comprising:
an exhaust heat recovery device provided in a main exhaust pipe of an engine and configured to recover heat from exhaust gas;
an exhaust gas recirculation pipe branched from the main exhaust pipe downstream of the exhaust heat recovery device and configured to recirculate exhaust gas to the engine;
an exhaust gas temperature acquisition unit configured to acquire an exhaust gas temperature downstream of the exhaust heat recovery device; and
an exhaust gas recirculation amount control unit configured to control a recirculation amount of exhaust gas flowing through the exhaust gas recirculation pipe based on at least the exhaust gas temperature.

2. The engine control device according to claim 1, wherein the exhaust gas temperature acquisition unit configured to acquire an exhaust gas temperature downstream of the exhaust heat recovery device is an exhaust temperature sensor disposed downstream of the exhaust heat recovery device or the exhaust gas recirculation pipe.

3. The engine control device according to claim 1, wherein the exhaust gas temperature acquisition unit configured to acquire an exhaust gas temperature downstream of the exhaust heat recovery device estimates the exhaust gas temperature based on at least a recovery heat amount or recovery efficiency of the exhaust heat recovery device.

4. The engine control device according to claim 1, wherein the exhaust gas recirculation amount control unit configured to control the exhaust gas recirculation amount is an EGR valve provided in the exhaust gas recirculation pipe.

5. The engine control device according to claim 1, wherein the exhaust gas recirculation amount control unit configured to control the recirculation amount of exhaust gas flowing through the exhaust gas recirculation pipe controls the exhaust gas recirculation amount such that an EGR rate is within a predetermined range.

6. The engine control device according to claim 1, wherein the exhaust gas recirculation amount control unit configured to control the recirculation amount of exhaust gas flowing through the exhaust gas recirculation pipe controls such that a temperatures of mixed gas of the exhaust gas recirculation amount and an intake air amount is within a predetermined range.

7. The engine control device according to claim 1, wherein the exhaust gas recirculation amount control unit configured to control the recirculation amount of exhaust gas flowing through the exhaust gas recirculation amount controls such that combustion stability is within a predetermined range.

8. The engine control device according to claim 1, wherein the ignition timing is corrected to an advance angle side in accordance with increase in the exhaust gas recirculation amount.

9. The engine control device according to claim 1, further comprising:
an abnormality determination unit configured to determine an abnormality of the exhaust heat recovery device based on the exhaust gas temperature downstream of the exhaust heat recovery device,
wherein when the exhaust heat recovery device is determined to be abnormal, the engine control device corrects the exhaust gas recirculation amount by a predetermined amount.
